# EUROPEAN PATENT SPECIFICATION

(11) **EP 4 080 962 B1**
(45) Date of publication and mention of the grant of the patent: **16.04.2025**
(21) Application number: 20912787.7
(22) Date of filing: 09.01.2020
(51) Int. Cl.: H04W 72/04

(54) **INFORMATION DETERMINATION METHOD, INFORMATION INDICATION METHOD, TERMINAL DEVICE, AND NETWORK DEVICE**
INFORMATIONSBESTIMMUNGSVERFAHREN, INFORMATIONSANZEIGEVERFAHREN, ENDGERÄT UND NETZWERKVORRICHTUNG
PROCÉDÉ DE DÉTERMINATION D'INFORMATIONS, PROCÉDÉ D'INDICATION D'INFORMATIONS, DISPOSITIF TERMINAL ET DISPOSITIF RÉSEAU

(43) Date of publication of application: 26.10.2022
(60) Divisional application: 25155780.7
(73) Proprietor: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Taor, Simon Edward William
(86) International application number: PCT/CN2020/071122
(87) International publication number: WO 2021/138866

(56) References cited:
- WO-A1-2017/083514
- CN-A- 110 049 559
- CN-A- 110 505 026
- US-A1- 2017 079 069
- VIVO: "Discussion on UL RS for NR positioning", vol. RAN WG1, no. Reno, USA; 20190513 - 20190517, 13 May 2019 (2019-05-13), XP051727632, Retrieved from the Internet <URL:http://www.3gpp.org/ftp/Meetings%5F3GPP%5FSYNC/RAN1/Docs/R1%2D1906178%2Ezip> [retrieved on 20190513]
- INTEL CORPORATION: "On UE capability signalling for Type II CSI", vol. RAN WG1, no. Busan, South Korea; 20180521 - 20180525, 20 May 2018 (2018-05-20), XP051441711, Retrieved from the Internet <URL:http://www.3gpp.org/ftp/Meetings%5F3GPP%5FSYNC/RAN1/Docs/> [retrieved on 20180520]
- ERICSSON: "Channel access procedures", 3GPP DRAFT; R1-1910947 CHANNEL ACCESS PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chongqing, China; 20191014 - 20191020, 8 October 2019 (2019-10-08), Mobile Competence Centre ; 650, route des Lucioles ; F-06921 Sophia-Antipolis Cedex ; France, XP051789727

## Description

### TECHNICAL FIELD

This application relates to the field of communications, and more specifically, to an information determination method, an information indication method, a terminal device, and a network device.

### BACKGROUND

The unlicensed spectrum is a spectrum that can be used for radio communications divided by countries and regions, and this spectrum is generally considered to be a shared spectrum. In order to allow various communication systems that use the unlicensed spectrum for wireless communication to coexist friendly on the spectrum, some countries or regions have stipulated the requirements that must be met when using the unlicensed spectrum. For example, in some regions, communication devices follow the "Listen-Before-Talk" (LBT) principle, that is, the communication devices need to perform channel listening before sending signals on the unlicensed spectrum channel. The communication devices can only perform signal transmission when the channel detection result is that the channel is free; if the channel detection result of a communication device on the channel of the unlicensed spectrum is that the channel is busy, the communication device cannot perform signal transmission. In addition, in order to ensure fairness, in one transmission, the duration of signal transmission by the communication device using the unlicensed spectrum channel cannot exceed the maximum channel occupation time (MCOT).

VIVO: "Discussion on UL RS for NR positioning", 3GPP DRAFT; R1-1906178, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Reno, USA; 13 May 2019, XP051727632, describes Uplink (UL) Reference Signal (RS) for New Radio (NR) positioning with some enhancements of Sounding Reference Signals (SRS) for positioning.

INTEL CORPORATION: "On UE capability signalling for Type II CSI", 3GPP DRAFT; R1-1806510 TYPE II CSI UE FEATURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, vol. RAN WG1, no. Busan, South Korea; 20 May 2018, XP051441711, describes two CSI types are supported in NR, where the UE capability signalling for Type II CSI is further described. US 2018/0310283 A1 describes transmit and/or receive beamforming may be applied to the control channel transmission/reception, e.g., in mmW access link system design. Techniques to identify candidate control channel beams and/or their location in the subframe structure may provide for efficient WTRU operation. A framework for beam formed control channel design may support varying capabilities of mBs and/or WTRUs, and/or may support time and/or spatial domain multiplexing of control channel beams. For a multi-beam system, modifications to reference signal design may discover, identify, measure, and/or decode a control channel beam. Techniques may mitigate inter-beam interference. WTRU monitoring may consider beam search space, perhaps in addition to time and/or frequency search space. Enhancements to downlink control channel may support scheduling narrow data beams. Scheduling techniques may achieve high resource utilization, e.g., perhaps when large bandwidths are available and/or WTRUs may be spatially distributed.

In the existing 5G New Radio in unlicensed spectrum (NR-U) technology, the channel occupation time (COT) obtained by the network device such as a base station can be shared with the terminal device such as a user equipment (UE) for uplink transmission. Similarly, the COT obtained by the terminal device can also be shared for the downlink transmission of the network device. In related art, when the network device or terminal device shares the channel resources occupied by itself to the opposite end, the necessary information required for sharing cannot be fully indicated. When the network device or terminal device shares the channel resources occupied by the opposite end, the necessary information for sharing cannot be determined.

### SUMMARY

The invention is defined by the independent claims. Embodiments are defined by the dependent claims.

### BRIEF DESCRIPTION OF THE DRAWINGS

FIG. 1 is a schematic diagram of an application scenario of some embodiments of this application.
FIG. 2 is a schematic flowchart of an information determination method 200 according to some embodiments of this application.
FIG. 3 is a schematic flowchart of an information indicating method 300 according to some embodiments of this application.
FIG. 4 is a schematic flowchart of an information indicating method 400 according to some embodiments of this application.
FIG. 5 is a schematic flowchart of an information determination method 500 according to some embodiments of this application.
FIG. 6 is a schematic diagram of indication information and uplink transmission resources according to embodiment I of this application.
FIG. 7 is a schematic diagram of indication information and uplink transmission resources according to embodiment II of this application.
FIG. 8 is a schematic diagram of indication information and channel occupation resources according to embodiment III of this application.
FIG. 9 is a schematic diagram of indication information and downlink transmission resources according to embodiment IV of this application.
FIG. 10 is a first block diagram of a terminal device 1000 according to some embodiments of this application.
FIG. 11 is a second block diagram of a terminal device 1000 according to some embodiments of this application.
FIG. 12 is a third block diagram of a terminal device 1000 according to some embodiments of this application.
FIG. 13 is a block diagram of a terminal device 1300 according to some embodiments of this application.
FIG. 14 is a block diagram of a network device 1400 according to some embodiments of this application.
FIG. 15 is a block diagram of a network device 1500 according to some embodiments of this application.
FIG. 16 is a block diagram of a communication device 1600 according to some embodiments of this application.
FIG. 17 is a block diagram of a chip 1700 according to some embodiments of this application.
FIG. 18 is a block diagram of a communication system 1800 according to some embodiments of this application.

### DETAILED DESCRIPTION

The technical solutions in some embodiments of this application will be described below in conjunction with the drawings in some embodiments of this application.

The technical solutions of the embodiments of this application can be applied to various communication systems, such as: Global System of Mobile Communication (GSM) system, Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolution system of the NR system, LTE-based access to unlicensed spectrum (LTE-U), NR-based access to unlicensed spectrum (NR-U) system, universal mobile telecommunication system (UMTS), wireless local area network (WLAN), wireless fidelity (WiFi), 5th-Generation (5G) system, or other communication systems.

Generally speaking, traditional communication systems support a limited number of connections and are easy for implementation. However, with the development of communication technology, mobile communication systems will not only support traditional communication, but also support, for example, device to device (D2D) communication, machine to machine (M2M) communication, machine type communication (MTC), vehicle to vehicle (V2V) communication, and the like. The embodiments of this application can also be applied to these communications system.

Optionally, the communication system in some embodiments of this application can be applied to a carrier aggregation (CA) scenario, can also be applied to a dual connectivity (DC) scenario, and can also be applied to a standalone (SA) network deployment.

The embodiments of the application do not limit the applied frequency spectrum. For example, the embodiments of this application can be applied to licensed spectrum or unlicensed spectrum.

The embodiments of this application describe various embodiments in combination with network device and terminal device. The terminal device may also be referred to as user equipment (UE), access terminal, subscriber unit, subscriber station, mobile station, mobile site, remote station, remote terminal, mobile device, user terminal, terminal, wireless communication device, user agent, user device, or the like. The terminal device may be a station (ST) in a WLAN, a cellular phone, a cordless phone, a session initiation protocol (SIP) phone, a wireless local loop (WLL) station, a personal digital processing (PDA) device, a handheld device or a computing device with wireless communication capabilities, or other processing devices connected to wireless modems, a vehicle-mounted device, a wearable device, or a terminal device in next-generation communication systems, such as NR network or future-evolved public land mobile network (PLMN).

As an example without limitation, in some embodiments of this application, the terminal device may also be a wearable device. Wearable devices may also be called wearable smart devices, which is a general term for wearable devices intelligently designed and developed using wearable technology based everyday wearing, such as glasses, gloves, watches, clothing and shoes. A wearable device is a portable device that may be directly worn on the human body or integrated into the user's clothes or accessories. Wearable devices are not only a kind of hardware device, but also can realize powerful functions through software support, data interaction, and cloud interaction. In a broad sense, wearable smart devices are full-featured, large-sized, and can achieve complete or partial functions without relying on smart phones, such as smart watches or smart glasses; and alternatively may focus on a specific type of application function, and need to cooperate with other devices such as smart phones for usage, such as smart bracelets and smart jewelry for monitoring various physical parameters.

A network device may be a device configured to communicate with mobile devices. The network device may be an access point (AP) in WLAN, a base station (BTS) in GSM or CDMA, a NodeB (NB) in WCDMA, an evolutional Node B (eNB or eNodeB) in LTE, a relay station or an access point, a vehicle-mounted device, a wearable device, a network device (gNB) in the NR network, or a network device in the future-evolved PLMN.

In some embodiment of this application, the network device provides services for a cell, and the terminal device communicates with the network device through the transmission resources (e.g.,, frequency domain resources, or spectrum resources) used by the cell, and the cell may correspond to the network device (e.g.,, base station). The cell may belong to a macro base station or a base station corresponding to a small cell. The small cell may include: metro cell, micro cell, pico cell, femto cell, and the like. These small cells have the characteristics of small coverage and low transmit power, and are suitable for providing high-rate data transmission services.

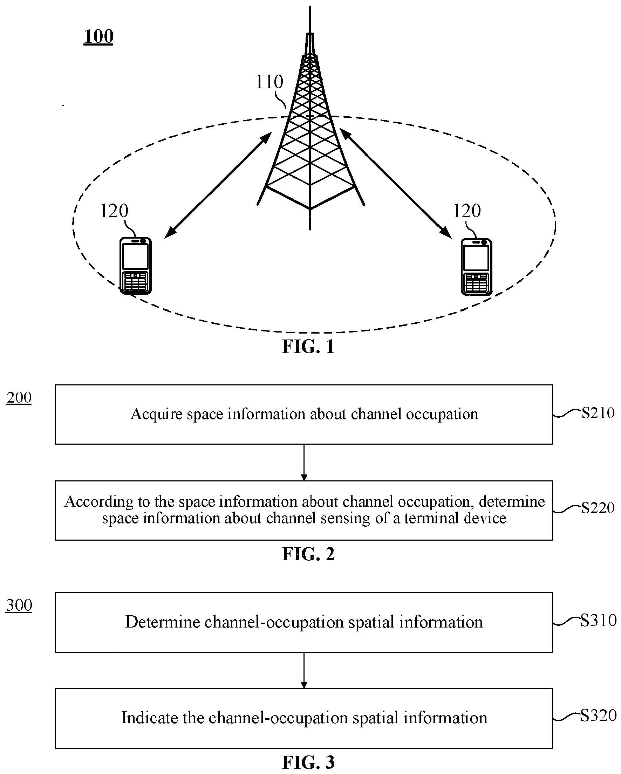

FIG. 1 exemplarily shows one network device 110 and two terminal devices 120. Optionally, the wireless communication system 100 may include multiple network devices 110, and the coverage of each network device 110 may include other numbers of terminal device 120, which is not limited in the embodiments of this application.

Optionally, the wireless communication system 100 may also include other network entities such as mobility management entity (MME), access and mobility management function (AMF), and the like, which are not limited in the embodiments of this application.

It should be understood that the terms "system" and "network" are often used interchangeably in this disclosure. The term "and/or" in this disclosure indicates an association relationship describing the associated objects, which means that there may be three relationships, for example, "A and/or B" means A exists alone, both A and B exist, and B exists alone. In addition, the character "/" in this disclosure generally indicates that the associated objects before and after are in an "or" relationship.

FIG. 2 is a schematic flowchart of an information determination method 200 according to some embodiments of this application. This method may be applied to the system shown in FIG. 1, and specifically may be applied to the terminal device in the system shown in FIG. 1, but is not limited thereto. The method includes at least part of the following content.

In S210, channel-occupation spatial information is acquired.

In S220, channel-sensing spatial information of the terminal device is determined according to the channel-occupation spatial information.

Optionally, in some embodiments of this application, step S210 includes:
acquiring the channel-occupation spatial information from a downlink control signaling (DCI) carrying an uplink (UL) grant.

In the above step S210, the channel-occupation spatial information may include: channel-sensing spatial information of the terminal device. For example, after the network device such as a base station acquires a COT, it schedules the terminal device such as a UE to share the COT of the base station, so that the UE can use the shared COT for uplink transmission. When scheduling the UE to perform uplink transmission, the base station can determine how the scheduled UE performs channel sensing before uplink transmission based on its own channel occupancy condition, including MCOT and channel-occupation spatial information (e.g., directional information), and carry relevant information in the DCI carrying UL grant.

In related art, the DCI including the UL grant carries the LBT type and the channel access priority. In some embodiments of this application, the DCI including the UL grant further carries the channel-sensing spatial information of the terminal device.

Optionally, in some embodiments of this application, the channel-occupation spatial information indicated in the DCI carrying the UL grant is indicated by at least one of the following:
synchronization signal / physical broadcast channel (SS/PBCH) block index;
non-zero power channel state information - reference signal (NZP-CSI-RS) resource identification (ID);
sounding reference signal (SRS) resource ID;
transmission configuration indication (TCI) state; and
SRS resource indicator.

Optionally, in some embodiments of this application, after the above step S210, the terminal device performs channel sensing according to the channel-sensing spatial information of the terminal device, and when a result of the channel sensing indicates a free channel, uses the free channel for uplink transmission.

Optionally, in some embodiments of this application, the terminal device acquires the channel-occupation spatial information in a preset manner. This preset manner may be used when there is no channel-occupation spatial information in the DCI carrying the UL grant.

Specifically, the preset manner includes at least one of the following:
acquiring the channel-occupation spatial information from a system information (SI) message;
acquiring the channel-occupation spatial information from a radio resource control (RRC) message;
acquiring the channel-occupation spatial information according to spatial information measured by the terminal device;
acquiring the channel-occupation spatial information according to spatial information received through a downlink channel; and
acquiring the channel-occupation spatial information from TCI information indicated by a network device in a downlink scheduling.

In some embodiments, the downlink channel refers to PDCCH, physical downlink shared channel (PDSCH), and the like.

Optionally, in some embodiments of this application, step S210 includes:
acquiring the channel-occupation spatial information from the message Msg2 in a random access procedure.

In some embodiments, in the above step S210, the channel-occupation spatial information includes the channel-sensing spatial information of the terminal device. For example, in the random access procedure, the base station sends Msg2 to the UE after detecting an access preamble carried in the Msg1 sent by the UE, where the Msg2 carries a random access response (RAR). When the base station sends Msg2, it can perform LBT to acquire COT. In some embodiments of this application, the base station shares the COT occupied by the base station with the UE for the UE to use when sending Msg3.

In related art, the LBT type is carried in the Msg2, and in some embodiments of this application, the channel-sensing spatial information of the terminal device is further carried in the Msg2.

Optionally, in some embodiments of this application, the channel-occupation spatial information indicated by the Msg2 in the random access procedure is indicated by at least one of the following:
SS/PBCH block index;
NZP-CSI-RS-Resource Id;
SRS Resource ID; and
TCI state.

Optionally, in some embodiments of this application, after the step S210, the method further includes: performing, by the terminal device, a channel sensing according to the channel-sensing spatial information of the terminal device, and when a result of the channel sensing indicates a free channel, using the free channel for transmission of Msg 3 in the random access procedure.

Optionally, in some embodiments of this application, the terminal device acquires the channel-occupation spatial information in a preset manner. The preset manner may be adopted when there is no channel-occupation spatial information in the Msg2 of the random access procedure.

Specifically, the preset manner includes at least one of the following:
determining the channel-occupation spatial information according to spatial information when sending Msg1 of the random access procedure; and
acquiring the channel-occupation spatial information according to spatial information measured by the terminal device.

In some embodiments, the spatial information measured by the terminal device specifically refers to spatial information acquired by the terminal device measuring SS/PBCH block.

Optionally, in some embodiments of this application, step S210 includes:
acquiring the channel-occupation spatial information from a group common PDCCH.

Optionally, the channel-occupation spatial information acquired from the group common PDCCH refers to the channel-occupation spatial information of the network device. For example, the base station indicates to a group of UEs the spatial information of channels currently occupied by the base station, so that the UE can perform reception of downlink channel or signal and transmission of uplink channel or signal according to the information as acquired.

In related art, the DCI format 2_0 in the group common PDCCH carries time-domain and frequency-domain information of the channel occupied by the base station, and in some embodiments of this application, the spatial-domain information of the channel occupied by the base station is further carried in the DCI format 2_0.

Optionally, in some embodiments of this application, acquiring the channel-occupation spatial information from the group common PDCCH includes:
acquiring the channel-occupation spatial information from the DCI format 2_0 in the group common PDCCH.

In some embodiments, the channel-occupation spatial information indicated in the DCI format 2_0 is indicated by at least one of the following:
SS/PBCH block index;
NZP-CSI-RS-Resource Id;
SRS Resource ID; and
TCI state.

Optionally, in some embodiments of this application, the terminal device acquires the channel-occupation spatial information in a preset manner. The preset manner may be adopted when there is no channel-occupation spatial information in the group common PDCCH.

Specifically, the preset manner may include:
determining the channel-occupation spatial information according to spatial information for receiving the DCI format 2_0.

In addition, in some embodiments of this application, the above-mentioned channel-sensing spatial information of the terminal device includes LBT directional information of the terminal device.

FIG. 3 is a schematic flowchart of an information indicating method 300 according to some embodiments of this application. This method may optionally be applied to the system shown in FIG. 1, and specifically may be applied to the terminal device in the system shown in FIG. 1, but is not limited thereto. The method includes at least part of the following content.

In S310, the channel-occupation spatial information is determined.

In S320, the channel-occupation spatial information is indicated.

Optionally, in some embodiments of this application, the channel-occupation spatial information includes: channel-sensing spatial information of the terminal device or channel-sensing spatial information of a network device.

Optionally, in some embodiments of this application, the foregoing step S320 includes:
indicating the channel-occupation spatial information through an uplink control signaling (UCI) carried in a configured grant uplink (CG-UL).

In related art, for CG-UL transmission, the UE sends uplink data on preconfigured uplink resources, which carries the UCI indicating information such as channel access priority, COT duration, maximum downlink transmission time and the like. The base station selects the type of LBT based on such information. In some embodiments of this application, the UCI carried in the CG-UL may also include the channel-occupation spatial information, such as the channel-sensing spatial information of the terminal device or the channel-sensing spatial information of the network device.

Optionally, in some embodiments of this application, the channel-occupation spatial information is used for determining the channel-sensing spatial information of the network device.

Optionally, the channel-sensing spatial information of the network device includes LBT directional information of the network device.

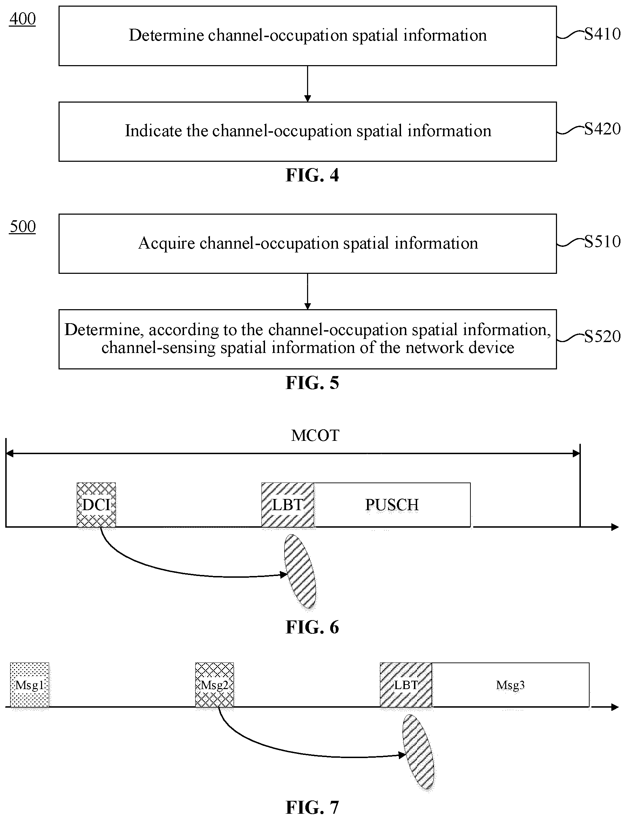

FIG. 4 is a schematic flowchart of an information indicating method 400 according to some embodiments of this application. This method may optionally be applied to the system shown in FIG. 1, and specifically may be applied to the network device in the system shown in FIG. 1, but is not limited thereto. The method includes at least part of the following content.

In S410, the channel-occupation spatial information is determined.

In S420, the channel-occupation spatial information is indicated.

Optionally, in some embodiments of this application, step S420 includes indicating the channel-occupation spatial information by using a DCI carrying a UL grant.

Optionally, in some embodiments of this application, the channel-occupation spatial information is indicated by at least one of following in the DCI carrying the UL grant:
SS/PBCH block index;
NZP-CSI-RS-Resource ID;
SRS Resource ID;
TCI state; and
SRS Resource Indicator.

Optionally, in some embodiments of this application, step S420 includes indicating the channel-occupation spatial information by using Msg2 in a random access procedure.

Optionally, in some embodiments of this application, the channel-occupation spatial information is indicated by at least one of following in the Msg2 in the random access procedure:
SS/PBCH block index;
NZP-CSI-RS-Resource ID;
SRS Resource ID; and
TCI state.

Optionally, in some embodiments of this application, the channel-occupation spatial information includes channel-sensing spatial information of the terminal device.

Optionally, in some embodiments of this application, step S420 includes indicating the channel-occupation spatial information by using a group common PDCCH.

Optionally, in some embodiments of this application, indicating the channel-occupation spatial information by using the group common PDCCH includes:
indicating the channel-occupation spatial information by using a DCI format 2_0 in the group common PDCCH.

Optionally, in some embodiments of the application, the channel-occupation spatial information is indicated by at least one of following in the DCI format 2_0:
SS/PBCH block index;
NZP-CSI-RS-Resource Id;
SRS Resource ID; and
TCI state.

Optionally, the channel-occupation spatial information includes: channel-sensing spatial information of the network device.

Optionally, in some embodiments of this application, the channel-occupation spatial information is used for determining the channel-sensing spatial information of the terminal device.

In some embodiments, the channel-sensing spatial information of the terminal device includes LBT directional information of the terminal device.

FIG. 5 is a schematic flowchart of an information determination method 500 according to some embodiments of this application. This method may optionally be applied to the system shown in FIG. 1, and specifically may be applied to the network device in the system shown in FIG. 1, but is not limited thereto this. The method includes at least part of the following content.

In S510, channel-occupation spatial information is acquired.

In S510, channel-sensing spatial information of the network device is determined according to the channel-occupation spatial information.

Optionally, in some embodiments of this application, the channel-occupation spatial information includes: channel-sensing spatial information of the terminal device or the channel-sensing spatial information of the network device.

Optionally, in some embodiments of this application, acquiring the channel-occupation spatial information includes:
acquiring the channel-occupation spatial information from an UCI carried in a CG-UL.

Optionally, in some embodiments of this application, the channel-sensing spatial information of the network device includes: LBT directional information of the network device.

Several specific embodiments are given below to describe implementation processes of the information determination method and the information indication method according to this application. In the following embodiments, the channel-occupation spatial information or the channel-sensing spatial information is exemplified as the LBT directional information, the terminal device is exemplified as the UE, and the network device is exemplified as the base station. The embodiments of this application are not limited thereto.

### Embodiment I

In some embodiments, the base station indicates the LBT directional information to the UE in the DCI carrying the UL grant.

In related art, when the base station schedules uplink transmission of the UE, the base station indicates, according to its own MCOT (e.g., whether the scheduled uplink transmission time falls within the MCOT range of the base station), the LBT type and channel access priority in the UL grant, based on which the UE performs LBT before scheduling uplink transmission.

In the unlicensed spectrum of high frequency band, due to the strong directionality of signal transmission, channels in different directions of the same bandwidth can be occupied separately with small mutual interference. Therefore, when the base station schedules the uplink transmission of the UE, the base station determines how the scheduled UE performs LBT before uplink transmission according to its own channel-occupation condition (including MCOT and channel-occupation directional information), and carry relevant indication in the DCI carrying the UL grant, including:
- LBT type
- Channel access priority
- LBT directional information

In some embodiments, the LBT directional information is used for indicating the UE to perform LBT according to the LBT type and channel access priority as indicated in the LBT direction as indicated.

FIG. 6 is a schematic diagram of indication information and uplink transmission resources according to Embodiment I of this application. As shown in FIG. 6, the base station indicates, in the DCI carrying the UL grant, LBT directional information for performing LBT before the scheduled physical uplink shared channel (PUSCH) transmission. After receiving the DCI, the UE starts PUSCH transmission after performing LBT according to the LBT directional information.

Optionally, in some embodiments of the application, when the DCI carrying the UL grant does not include LBT directional information, the UE may determine the LBT directional information by using a preset direction, for example, preset channel-sensing directional information for a cell indicated by a system message, or channel-sensing directional information configured by an RRC message. Alternatively, the UE may determine the LBT direction in an implicit manner, for example, based on beam information measured by the UE, or TCI information indicated by the base station in a downlink scheduling (e.g., the TCI information in the DCI of the most recent downlink scheduling). Alternatively, in some embodiments of this application, the channel-occupation spatial information of the base station may be acquired from the group common PDCCH, and the specific acquiring method may refer to the method in the following embodiment III.

Optionally, in some embodiments of the application, when the DCI carrying the UL grant includes the LBT directional information, the LBT directional information is indicated in the form of SS/PBCH block index, that is, the LBT direction indicated in the DCI is indicated by using an SS/PBCH block index. The SS/PBCH block index corresponds to the direction of the transmission beam, and the UE performs channel sensing in the direction corresponding to the transmission beam.

Optionally, in some embodiments of the application, the LBT directional information is indicated in the form of non-zero power CSI-RS resource ID (NZP-CSI-RS-ResourceId) of the CSI-RS. In other words, the LBT direction indicated in the DCI is indicated by using an NZP-CSI-RS-ResourceId. The NZP-CSI-RS-ResourceId corresponds to the direction of the transmission beam, and the UE performs channel sensing in the direction corresponding to the transmission beam.

Optionally, in some embodiments of this application, the LBT direction may also be indicated in the form of SRS resource ID. The SRS resource ID corresponds to the direction of the uplink transmission beam, and the UE performs channel sensing in the direction of the transmission beam. The directional information of LBT can also be determined based on the SRS resource indicator in the existing DCI format 0_1.

Optionally, in some embodiments of this application, the LBT direction may also be indicated in the form of TCI state. The base station configures several TCI states for the UE, and each TCI state is used to configure a correspondence between one or two downlink reference signals and a transmission beam. In related art, the TCI state is used by the base station to indicate a corresponding quasi co-located (QCL) reference signal to the terminal before transmitting the downlink data channel, so that the terminal can receive the corresponding downlink data channel by using the receiving beam which is previously used for receiving the QCL reference signal. In some embodiments, the DCI carrying the UL grant includes TCI information, which is used to indicate the direction in which the UE performs LBT before uplink transmission. Specifically, the TCI state is configured by the network side, and the TCI state can be activated through a medium access control (MAC) control element (CE). The TCI information carried in the DCI corresponds to one of the activated TCI states.

Optionally, in some embodiments of this application, the LBT directional information includes one or more LBT directions. When multiple LBT directions are included, the UE may select one of the LBT directions for channel sensing.

According to some embodiments of this application, the LBT directional information before the UE's uplink transmission can be accurately indicated, so as to avoid the inconsistency between spatial attributes of channel acquired by the base station and spatial attributes of channel used by the UE for uplink transmission, which may result in that the COT of the base station cannot be effectively shared with the UE.

### Embodiment II

In some embodiments, the base station carries the LBT directional information in the Msg2 during the random access procedure, which is used by the UE to perform LBT according to the LBT directional information before sending the Msg3.

In the existing NR-U system, in order to make full use of the preempted channel resources, the COT acquired by the base station can be shared for use by the UE, and the COT acquired by the UE can also be shared for use by the base station. One scenario is that in the random access procedure, after the base station receives Msg1 sent by the UE, when sending Msg2, the base station performs LBT to acquire the COT. The base station carries, in Msg2, the resource information when the UE sends Msg3 and the type of LBT, so that the UE can share the COT of the base station when sending Msg3.

Similarly, on the unlicensed spectrum in the high frequency band, in order to facilitate the sharing of COT during random access, the base station in some embodiments of this application indicates, in Msg2, the LBT type as well as the LBT directional information, which is used by the UE to perform LBT based on the LBT directional information before sending Msg3.

Specifically, similar to the embodiment I, the channel-occupation directional information in the COT indication information carried in the DCI format 2_0 may include an identifier of the reference signal, such as the SS/PBCH block index. For connected UEs, it may also be NZP-CSI-RS-ResourceId or SRS resource ID. Alternatively, it may be indicated by means of TCI state. It may also be preset channel-occupation directional information, or may be implicitly determined, for example, based on the spatial information when the UE sends Msg1. The spatial information when the UE sends Msg1 is related to the SS/PBCH block index. Alternatively, in some embodiments of this application, the channel-occupation spatial information of the base station may be acquired from the group common PDCCH, and the specific acquiring method may refer to the method in the following embodiment III.

FIG. 7 is a schematic diagram of indication information and uplink transmission resources according to the embodiment II of this application. As shown in Fig. 7, in the random access procedure, the UE sends Msg1. After receiving Msg1, the base station sends a corresponding message Msg2, and Msg2 carries the time-frequency resource for the UE to send Msg3, as well as the LBT type and the directional information.

According to some embodiments of this application, the LBT directional information before the UE's transmission of Msg3 can be accurately indicated, so as to avoid the inconsistency between spatial attributes of channel acquired by the base station when sending Msg2 and spatial attributes of channel used by the UE for sending Msg3, which may result in that the COT of the base station cannot be effectively shared with the UE.

### Embodiment III

In some embodiments, the group common PDCCH is used to indicate the channel-occupation LBT directional information.

DCI format 2_0 is the DCI format in the group common PDCCH. In the NR-U system, DCI format2_0 can be used for COT-related indication information, including the following indication fields: available LBT bandwidth, COT duration, and sensing group identifier.

The COT indication information carried in the DCI format 2_0 is used to indicate the channel occupation acquired by the base station for the UE, including time domain and frequency domain. In the unlicensed spectrum of the high frequency band, due to the strong directionality of signal transmission, channels in different directions in the same bandwidth and at the same time can be occupied separately with small mutual interference. Therefore, in some embodiments of this application, when the group common PDCCH indicates the COT information acquired by the base station, it includes not only time domain and frequency domain information, but also the LBT directional information.

The UE that receives the COT indication information carried by the DCI format 2_0 can obtain the time domain, frequency domain, and spatial domain information of the channel occupied by the base station, so as to determine the UE's reception of downlink channels or signals, and the transmission of uplink channels, for example, the reception of UE-specific PDCCH; measurement of beam-related reference signals, such as SS/PBCH block and CSI-RS; the UE's LBT type and LBT direction when the base station's COT is shared with the UE.

Specifically, similar to the embodiment I, the channel-occupation directional information in the COT indication information carried in the DCI format 2_0 may include the identifier of the reference signal, such as the SS/PBCH block index, NZP-CSI-RS-ResourceId or SRS resource ID. Alternatively, it may be indicated by means of TCI state. It may also be preset channel-occupation directional information, or may be implicitly determined. For example, the LBT directional information may be determined based on the spatial information for receiving the DCI format 2_0.

Optionally, in some embodiments of this application, the LBT directional information may include one or more LBT directions, and each LBT directional information may correspond to one or more available LBT bandwidths, COT durations, or sensing group identifiers, respectively.

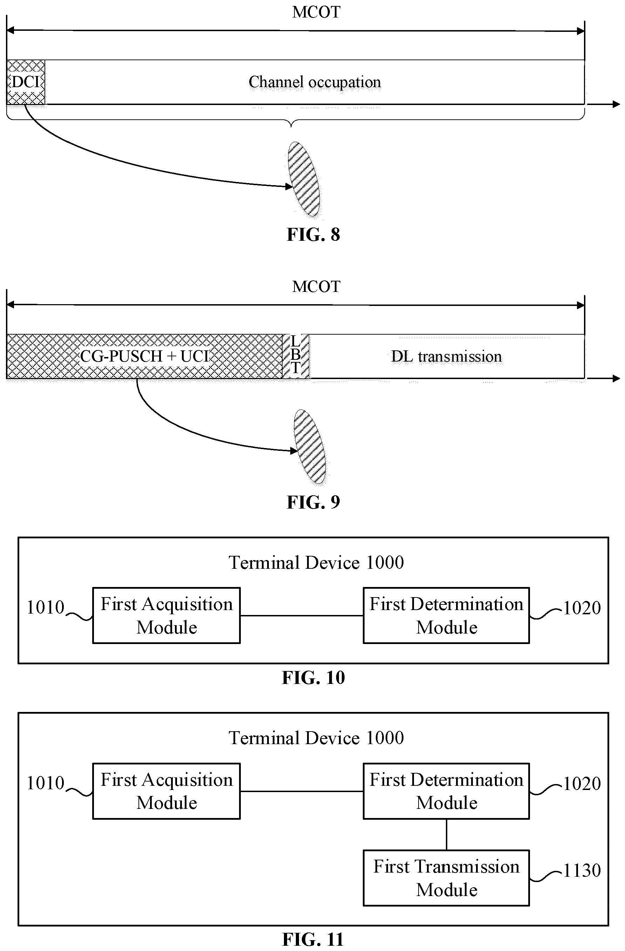

FIG. 8 is a schematic diagram of indication information and channel occupation resources according to the embodiment III of this application. As shown in FIG. 8, the base station indicates the channel-occupation spatial information of the base station in the DCI.

According to some embodiments of this application, the spatial attributes of the channel currently occupied by base stations can be accurately indicated to a group of UEs, so that the UE can receive the downlink channel or transmit through the uplink channel according to the spatial attributes by using correct settings, such as beam, precoding and the like.

### Embodiment IV

In some embodiments, the UCI carried by the UE in the CG-UL includes the LBT directional information, which is used by the base station to determine the direction of LBT.

In related art, for CG-UL transmission, the UE sends uplink data on preconfigured UL resources, which carries UCI. The UCI indicates channel access priority, COT duration information, and maximum downlink transmission time. The base station selects the LBT type based on this information including, for example, the length of gap between uplink transmission and downlink transmission, and the duration of downlink transmission.

In some embodiments, the UCI carried in the CG-UL includes LBT directional information, which is used by the base station to determine the direction of LBT. The LBT directional information may be the direction in which the UE performs LBT when transmitting CG-UL, or the direction in which the base station performs LBT when the COT of the UE is shared with the base station. In some embodiments, the LBT directional information indicated in the UCI has a corresponding relationship with the direction in which the base station performs LBT.

FIG. 9 is a schematic diagram of indication information and downlink transmission resources according to the embodiment IV of this application. As shown in FIG. 9, the UCI carried by the UE in the CG-UL includes the LBT directional information. After receiving the LBT directional information, the base station determines the direction of LBT before downlink transmission according to the LBT directional information.

According to some embodiments of this application, the direction of LBT before the CG-UL of the UE or the direction of LBT before the downlink transmission of the base station can be accurately indicated, so that the base station can determine the direction of LBT before the downlink transmission according thereto, so as to avoid the inconsistency between spatial attributes of corresponding channels when the base station shares the UE's COT, which may result in that the base station is unable to effectively share the COT of the UE.

FIG. 10 is a block diagram of a terminal device 1000 according to some embodiments of this application. The terminal device may include a first acquisition module 1010 and a first determination module 1020.

The first acquisition module 1010 is configured to acquire channel-occupation spatial information.

The first determination module 1020 is configured to determine, according to the channel-occupation spatial information, channel-sensing spatial information of the terminal device.

Optionally, the first acquisition module 1010 is configured to acquire the channel-occupation spatial information from the DCI carrying the UL grant.

Optionally, the channel-occupation spatial information indicated in the DCI carrying the UL grant is indicated by at least one of following:
SS/PBCH block index;
NZP-CSI-RS-ResourceId;
SRS Resource ID;
TCI state; and
SRS Resource Indicator.

Optionally, the channel-occupation spatial information includes: channel-sensing spatial information of the terminal device.

Optionally, in some embodiments of this application, as shown in FIG. 11, the terminal device 1000 further includes a first transmission module 1130.

The first transmission module 1130 is configured to perform a channel sensing according to the channel-sensing spatial information of the terminal device, and when a result of the channel sensing indicates a free channel, using the free channel for uplink transmission.

Optionally, the first acquisition module 1010 is configured to acquire the channel-occupation spatial information in a preset manner.

Optionally, the preset manner includes at least one of the following:
acquiring the channel-occupation spatial information from a system information message;
acquiring the channel-occupation spatial information from an RRC message;
acquiring the channel-occupation spatial information according to spatial information measured by the terminal device;
acquiring the channel-occupation spatial information according to spatial information received through a downlink channel; and
acquiring the channel-occupation spatial information from TCI information indicated by a network device in a downlink scheduling.

Optionally, the first acquisition module 1010 is configured to acquire the channel-occupation spatial information from the Msg2 in the random access procedure.

Optionally, the channel-occupation spatial information indicated by the Msg2 in the random access procedure is indicated by at least one of following:
SS/PBCH block index;
NZP-CSI-RS-ResourceId;
SRS Resource ID; and
TCI state.

Optionally, the channel-occupation spatial information includes: channel-sensing spatial information of the terminal device.

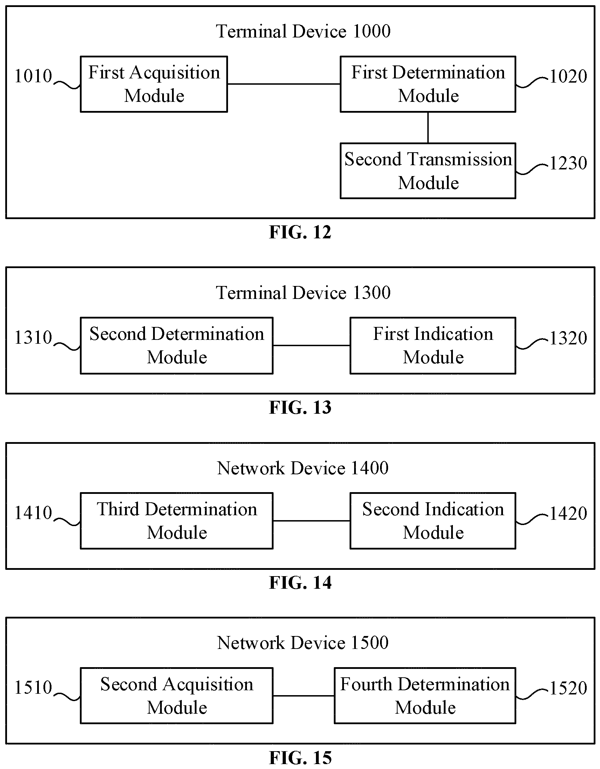

Optionally, in some embodiments of this application, as shown in FIG. 12, the terminal device 1000 may further include a second transmission module 1230.

The second transmission module 1230 is configured to perform a channel sensing according to the channel-sensing spatial information of the terminal device, and when a result of the channel sensing indicates a free channel, uses the free channel for transmission of Msg 3 in a random access procedure.

Optionally, the first acquisition module 1010 is configured to acquire the channel-occupation spatial information in a preset manner.

Optionally, the preset manner includes at least one of the following:
determining the channel-occupation spatial information according to spatial information when sending Msg1 in a random access procedure; and
acquiring the channel-occupation spatial information according to spatial information measured by the terminal device.

Optionally, the first acquisition module 1010 is configured to acquire the channel-occupation spatial information from the group common PDCCH.

Optionally, the first acquisition module 1010 is configured to acquire the channel-occupation spatial information from a DCI format 2_0 in the group common PDCCH.

Optionally, the channel-occupation spatial information indicated in the DCI format 2_0 is indicated by at least one of following:
SS/PBCH block index;
NZP-CSI-RS-ResourceId;
SRS Resource ID; and
TCI state.

Optionally, the first acquisition module 1010 is configured to acquire the channel-occupation spatial information in a preset manner.

Optionally, the preset manner includes: determining the channel-occupation spatial information according to spatial information for receiving the DCI format 2_0.

Optionally, the channel-occupation spatial information includes: channel-occupation spatial information of the network device.

Optionally, the channel-sensing spatial information of the terminal device includes: LBT directional information of the terminal device.

FIG. 13 is a block diagram of a terminal device 1300 according to some embodiments of this application. The terminal device includes a second determination module 1310 and a first indication module 1320.

The second determination module 1310 is configured to determine the channel-occupation spatial information.

The first indication module 1320 is configured to indicate the channel-occupation spatial information.

Optionally, the channel-occupation spatial information includes: channel-sensing spatial information of the terminal device or channel-sensing spatial information of a network device.

Optionally, the first indication module 1320 is configured to indicate the channel-occupation spatial information through the UCI carried in the CG-UL.

Optionally, the channel-occupation spatial information is used for determining channel-sensing spatial information of the network device.

Optionally, the channel-sensing spatial information of the network device includes LBT directional information of the network device.

It should be understood that the above-mentioned and other operations and/or functions of each module in the terminal device according to the embodiments of this application are used to implement the corresponding process of the terminal device in the method 200 of FIG. 2 or the method 300 of FIG. 3, respectively. For the sake of brevity, it will not be repeated here.

FIG. 14 is a block diagram of a network device 1400 according to some embodiments of this application. The network device includes a third determination module 1410 and a second indication module 1420.

The third determination module 1410 is configured to determine the channel-occupation spatial information.

The second indication module 1420 is configured to indicate the channel-occupation spatial information.

Optionally, the second indication module 1420 is configured to indicate the channel-occupation spatial information by using the DCI carrying the UL grant.

Optionally, the channel-occupation spatial information is indicated by at least one of the following in the DCI carrying the UL grant:
SS/PBCH block index;
NZP-CSI-RS-ResourceId;
SRS Resource ID;
TCI state; and
SRS Resource Indicator.

Optionally, the second indication module 1420 is configured to indicate the channel-occupation spatial information by using Msg2 in the random access procedure.

Optionally, the channel-occupation spatial information is indicated by at least one of the following items in Msg2 in the random access procedure:
SS/PBCH block index;
NZP-CSI-RS-ResourceId;
SRS Resource ID; and
TCI state.

Optionally, the channel-occupation spatial information includes: channel-sensing spatial information of the terminal device.

Optionally, the second indication module 1420 is configured to indicate the channel-occupation spatial information by using a group common PDCCH.

Specifically, the second indication module 1420 is configured to indicate the channel-occupation spatial information by using the DCI format 2_0 in the group common PDCCH.

Optionally, the channel-occupation spatial information is indicated by using at least one of the following in DCI format 2_0:
SS/PBCH block index;
NZP-CSI-RS-ResourceId;
SRS Resource ID; and
TCI state.

Optionally, the channel-occupation spatial information includes: channel-sensing spatial information of the network device.

Optionally, the channel-occupation spatial information is used for determining the channel-sensing spatial information of the terminal device.

Optionally, the channel-sensing spatial information of the terminal device includes: LBT directional information of the terminal device.

FIG. 15 is a block diagram of a network device 1500 according to some embodiments of this application. The network device includes a second acquisition module 1510 and a fourth determination module 1520.

The second acquisition module 1510 is configured to acquire channel-occupation spatial information.

The fourth determination module 1520 is configured to determine the channel-sensing spatial information of the network device according to the channel-occupation spatial information.

Optionally, the channel-occupation spatial information includes: channel-sensing spatial information of a terminal device or channel-sensing spatial information of the network device.

Optionally, the second acquisition module 1510 is configured to acquire the channel-occupation spatial information from the UCI carried in the CG-UL.

Optionally, the channel-sensing spatial information of the network device includes: LBT directional information of the network device.

It should be understood that the above-mentioned and other operations and/or functions of each module in the network device according to the embodiments of this application are configured to implement the corresponding process of the network device in the method 400 of FIG. 4 or the method 500 of FIG. 5, respectively. For the sake of brevity, it will not be repeated here.

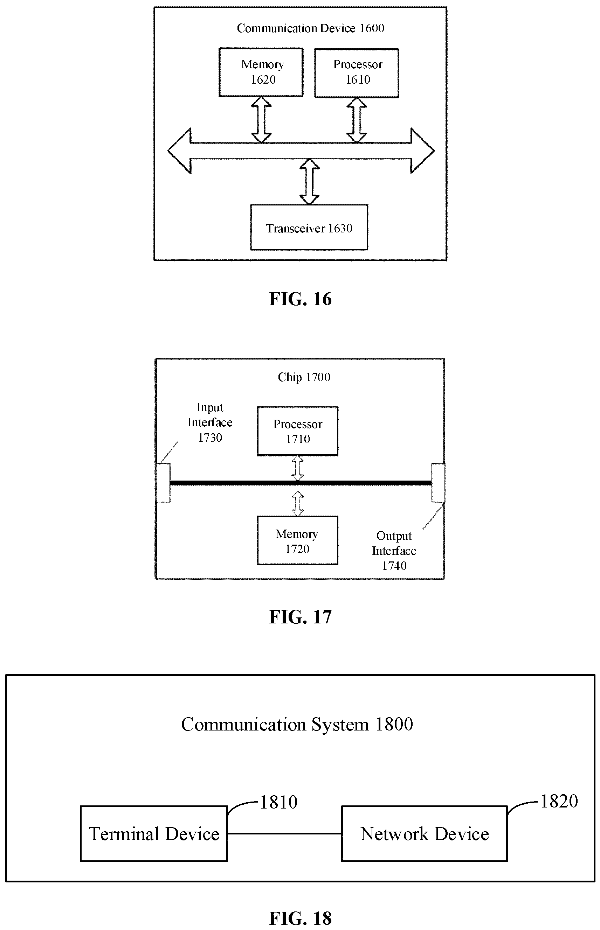

FIG. 16 is a block diagram of a communication device 1600 according to some embodiments of this application. The communication device 1600 shown in FIG. 16 includes a processor 1610, and the processor 1610 is configured to call and run a computer program from a memory to implement the method in some embodiments of this application.

Optionally, as shown in FIG. 16, the communication device 1600 may further include a memory 1620. The processor 1610 is configured to call and run the computer program from the memory 1620 to implement the method in some embodiments of this application.

The memory 1620 may be a separate device independent of the processor 1610, or may be integrated in the processor 1610.

Optionally, as shown in FIG. 16, the communication device 1600 may further include a transceiver 1630, and the processor 1610 is configured to control the transceiver 1630 to communicate with other devices. Specifically, the transceiver 1630 may send information or data to other devices, or receive information or data sent by the other devices.

In some embodiments, the transceiver 1630 may include a transmitter and a receiver. The transceiver 1630 may further include an antenna, and the number of antennas may be one or more.

Optionally, the communication device 1600 may be the network device in some embodiments of this application, and the communication device 1600 may implement corresponding processes implemented by the network device in each method according to the embodiments of this application. For brevity, details are not repeated herein.

Optionally, the communication device 1600 may be the terminal device in some embodiments of this application, and the communication device 1600 may implement corresponding processes implemented by the terminal device in each method according to the embodiments of this application. For brevity, details are not repeated herein.

FIG. 17 is a block diagram of a chip 1700 according to some embodiments of this application. The chip 1700 shown in FIG. 17 includes a processor 1710, and the processor 1710 is configured to call and run a computer program from a memory to implement the method in some embodiments of this application.

Optionally, as shown in FIG. 17, the chip 1700 may further include a memory 1720. The processor 1710 is configured to call and run the computer program from the memory 1720 to implement the method in some embodiments of this application.

The memory 1720 may be a separate device independent of the processor 1710, or may be integrated in the processor 1710.

Optionally, the chip 1700 may further include an input interface 1730. The processor 1710 is configured to control the input interface 1730 to communicate with other devices or chips, and specifically, may obtain information or data sent by other devices or chips.

Optionally, the chip 1700 may further include an output interface 1740. The processor 1710 is configured to control the output interface 1740 to communicate with other devices or chips, and specifically, may output information or data to other devices or chips.

Optionally, the chip 1700 may be applied to the network device in some embodiments of this application, and the chip may implement the corresponding processes implemented by the network device in the various methods according to the embodiments of this application. For brevity, details are not repeated herein.

Optionally, the chip 1700 may be applied to the terminal device in some embodiments of this application, and the chip may implement the corresponding processes implemented by the terminal device in the various methods according to the embodiments of this application. For brevity, details are not repeated herein.

It should be understood that the chip mentioned in some embodiments of this application may also be referred to as a system-level chip, a system chip, a chip system, a system-on-chip, or the like.

The processors mentioned above may be general-purpose processors, digital signal processors (DSPs), field programmable gate arrays (FPGAs), application specific integrated circuits (ASICs), or other programmable logic devices, transistor logic devices, discrete hardware components, or the like. In some embodiments, the general-purpose processor may be a microprocessor or any conventional processor.

The memory mentioned above may be volatile memory or non-volatile memory, or may include both volatile memory and non-volatile memory. In some embodiments, the non-volatile memory may be read-only memory (ROM), programmable ROM (PROM), erasable PROM (EPROM), electrically EPROM (EEPROM) or flash memory. The volatile memory may be random access memory (RAM).

It should be understood that the memories mentioned above are exemplary but not restrictive. For example, the memory in some embodiments of this application may also be static RAM (SRAM), dynamic RAM (DRAM), synchronous DRAM (SDRAM), double data rate SDRAM (DDR SDRAM), enhanced SDRAM (ESDRAM), synch link DRAM (SLDRAM), direct rambus RAM (DR RAM), and the like. In other words, the memory in the embodiments of this application is intended to include, but is not limited to, these and any other suitable types of memory.

FIG. 18 is a block diagram of a communication system 1800 according to some embodiments of this application. As shown in FIG. 18, the communication system 1800 includes a terminal device 1810 and a network device 1820.

The terminal device 1810 is configured to acquire the channel-occupation spatial information; and determine, according to the channel-occupation spatial information, the channel-sensing spatial information of the terminal device. Alternatively, the terminal device 1810 is configured to determine the channel-occupation spatial information; and indicate the channel-occupation spatial information.

The network device 1820 is configured to acquire the channel-occupation spatial information; and determine, according to the channel-occupation spatial information, the channel-sensing spatial information of the network device. Alternatively, the network device 1820 is configured to determine the channel-occupation spatial information; and indicate the channel-occupation spatial information.

In some embodiments, the terminal device 1810 is configured to implement the corresponding functions implemented by the terminal device in the above methods, and the network device 1820 is configured to implement the corresponding functions implemented by the network device in the above methods. For the sake of brevity, it will not repeated herein.

The above embodiments may be implemented in whole or in part by software, hardware, firmware, or any combination thereof. When implemented by software, they may be implemented in the form of a computer program product in whole or in part. The computer program product includes one or more computer instructions. When the computer program instructions are loaded and executed on the computer, the processes or functions described in the embodiments of this application are generated in whole or in part. The computer may be a general-purpose computer, a special-purpose computer, a computer network, or other programmable devices. The computer instructions may be stored in a computer-readable storage medium, or transmitted from one computer-readable storage medium to another computer-readable storage medium. For example, the computer instructions may be transmitted from a website, computer, server, or data center through a cable (e.g., coaxial cable, optical fiber, digital subscriber line (DSL)) or a wireless manner (e.g., infrared, radio, microwave, and the like) to another website, computer, server or data center. The computer-readable storage medium may be any available medium that can be accessed by a computer or a data storage device such as a server or data center integrated with one or more available mediums. The available medium may be a magnetic medium (e.g., a floppy disk, a hard disk, and a magnetic tape), an optical medium (e.g., a DVD), or a semiconductor medium (e.g., a solid state disk (SSD)).

It should be understood that in the various embodiments of this application, the size of the sequence number of the above-mentioned processes does not mean the order of execution, and the execution order of each process should be determined by its function and internal logic, and should not constitute any limitation to the embodiments of this application.

It should be understood by those skilled in the art that, for the convenience and conciseness of the description, the specific working process of the above-described system, device, and module may refer to the corresponding process in the foregoing method embodiments, which will not be repeated herein.

## Claims

1. An information determination method, applied to a terminal device, comprising:
acquiring (S210) channel-occupation directional information from a downlink control signaling, DCI, carrying an uplink, UL, grant;
determining (S220), according to the channel-occupation directional information, listen-before-talk, LBT, directional information of the terminal device, wherein the LBT directional information is used to establish a direction of transmission beam; and
performing, by the terminal device, a channel sensing according to the LBT directional information of the terminal device, and when a result of the channel sensing indicates a free channel, using the free channel for uplink transmission,
wherein the channel-occupation directional information indicated in the DCI carrying the UL grant is indicated by at least one of following:
a synchronization signal/physical broadcast channel, SS/PBCH, block index;
a non-zero power channel state information reference signal, NZP-CSI-RS, resource identification;
a sounding reference signal, SRS, resource identification;
a transmission configuration indication, TCI, state; and
an SRS resource indicator,
wherein the DCI is DCI format 0_1 or DCI format 2_0.

2. The method as claimed in claim 1, wherein acquiring (S210) the channel-occupation directional information further comprising:
acquiring the channel-occupation directional information from a system information message;
acquiring the channel-occupation directional information from a radio resource control, RRC, message;
acquiring the channel-occupation directional information according to spatial information measured by the terminal device;
acquiring the channel-occupation directional information according to spatial information received through a downlink channel; and/or
acquiring the channel-occupation directional information from transmission configuration indication, TCI, information indicated by a network device.

3. The method as claimed in claim 1 or 2, further comprising:
acquiring, by the terminal device, the channel-occupation directional information according to a TCI state configured by a network device, wherein the TCI state is activated through a medium access control, MAC, control element, CE.

4. The method as claimed in claim 1, wherein acquiring the channel-occupation directional information comprises:
acquiring the channel-occupation directional information from a message Msg2 in a random access procedure,
wherein the channel-occupation directional information indicated by the Msg2 in the random access procedure is indicated by at least one of following:
an SS/PBCH block index;
an NZP-CSI-RS resource identification;
an SRS resource identification; and
a TCI state,
and the method further comprises:
using the free channel for transmission of Msg 3 in a random access procedure.

5. An information indication method, applied to a network device, comprising:
determining (S410) channel-occupation directional information; and
indicating (S420) the channel-occupation directional information by using a downlink control signaling, DCI, carrying an uplink, UL, grant,
wherein the channel-occupation directional information is used by a terminal device to determine listen-before-talk, LBT, directional information of the terminal device, and the LBT directional information is used to establish a direction of transmission beam;
wherein the channel-occupation directional information is indicated by at least one of following in the DCI carrying the UL grant:
a synchronization signal/physical broadcast channel, SS/PBCH, block index;
a non-zero power channel state information reference signal, NZP-CSI-RS, resource identification;
a sounding reference signal, SRS, resource identification;
a transmission configuration indication, TCI, state; and
an SRS resource indicator,
wherein the DCI is DCI format 0_1 or DCI format 2_0.

6. The method as claimed in claim 5, wherein indicating (S420) the channel-occupation directional information comprises:
indicating the channel-occupation directional information by using a message Msg2 in a random access procedure,
wherein the channel-occupation directional information is indicated by at least one of following in the Msg2 in the random access procedure:
an SS/PBCH block index;
an NZP-CSI-RS resource identification;
an SRS resource identification; and
a TCI state.

7. A terminal device, comprising:
a first acquisition module (1010), configured to acquire channel-occupation directional information from a downlink control signaling, DCI, carrying an uplink, UL, grant;
a first determination module (1020), configured to determine, according to the channel-occupation directional information, listen-before-talk, LBT, directional information of the terminal device, wherein the LBT directional information is used to establish a direction of transmission beam; and
a first transmission module (1030) configured to perform a channel sensing according to the LBT directional information of the terminal device, and when a result of the channel sensing indicates a free channel, using the free channel for uplink transmission,
wherein the channel-occupation directional information indicated in the DCI carrying the UL grant is indicated by at least one of following:
a synchronization signal/physical broadcast channel, SS/PBCH, block index;
a non-zero power channel state information reference signal, NZP-CSI-RS, resource identification;
a sounding reference signal, SRS, resource identification;
a transmission configuration indication, TCI, state; and
an SRS resource indicator,
wherein the DCI is DCI format 0_1 or DCI format 2_0.

8. A network device, comprising:
a third determination module (1410), configured to determine channel-occupation directional information; and
a second indication module (1420), configured to indicate the channel-occupation directional information by using a downlink control signaling, DCI, carrying an uplink, UL, grant,
wherein the channel-occupation directional information is used by a terminal device to determine listen-before-talk, LBT, directional information of the terminal device, and the LBT directional information is used to establish a direction of transmission beam;
wherein the channel-occupation directional information is indicated by at least one of following in the DCI carrying the UL grant:
a synchronization signal/physical broadcast channel, SS/PBCH, block index;
a non-zero power channel state information reference signal, NZP-CSI-RS, resource identification;
a sounding reference signal, SRS, resource identification;
a transmission configuration indication, TCI, state; and
an SRS resource indicator,
wherein the DCI is DCI format 0_1 or DCI format 2_0.

9. A terminal device, comprising a processor and memory, wherein the memory is configured to store a computer program, which when executed on the processor, causes the processor to perform the method as claimed in any of claims 1 to 4.

10. A network device, comprising a processor and memory, wherein the memory is configured to store a computer program, which when executed on the processor, causes the processor to perform the method as claimed in any of claims 5 to 6.

11. A computer-readable medium, storing a computer program thereon, which when executed on a processor, causes the computer program to implement the method as claimed in any of claims 1 to 6.

## Patentansprüche

1. Informationsbestimmungsverfahren, angewendet auf ein Endgerät, umfassend:
Erfassen (S210) von Kanalbelegungsrichtungsinformationen aus einer Downlink-Steuersignalisierung, DCI, die eine Uplink-, UL-, Zuweisung trägt;
Bestimmen (S220) von Listen-before-Talk("Hören-vor-Sprechen")-, LBT-, Richtungsinformationen des Endgeräts gemäß den Kanalbelegungsrichtungsinformationen, wobei die LBT-Richtungsinformationen dazu verwendet werden, eine Richtung eines Übertragungsstrahls festzulegen; und
Durchführen einer Kanalabtastung durch das Endgerät gemäß den LBT-Richtungsinformationen des Endgeräts, und wenn ein Ergebnis der Kanalabtastung einen freien Kanal anzeigt, Verwenden des freien Kanals für die Uplink-Übertragung,
wobei die Kanalbelegungsrichtungsinformationen, die in der die UL-Zuweisung tragenden DCI angezeigt werden, durch mindestens eines des Folgenden angezeigt werden:
einen Synchronisationssignal/physikalischen Broadcast-Kanal-, SS/PBCH-, Blockindex;
eine Nicht-Null-Leistungs-Kanalzustandsinformations-Referenzsignal-, NZP-CSI-RS-, Ressourcenidentifikation;
eine Sondierungsreferenzsignal-, SRS-, Ressourcenidentifikation;
einen Übertragungskonfigurationsanzeige-, TCI-, Zustand; und
eine SRS-Ressourcenkennung,
wobei die DCI das DCI-Format 0_1 oder das DCI-Format 2_0 ist.

2. Verfahren nach Anspruch 1, wobei das Erfassen (S210) der Kanalbelegungsrichtungsinformationen ferner umfasst:
Erfassen der Kanalbelegungsrichtungsinformationen aus einer Systeminformationsnachricht;
Erfassen der Kanalbelegungsrichtungsinformationen aus einer Funkressourcensteuerungs-, RRC-, Nachricht;
Erfassen der Kanalbelegungsrichtungsinformationen gemäß räumlichen Informationen, die durch das Endgerät gemessen werden;
Erfassen der Kanalbelegungsrichtungsinformationen gemäß räumlichen Informationen, die über einen Downlink-Kanal empfangen werden; und/oder
Erfassen der Kanalbelegungsrichtungsinformationen aus Übertragungskonfigurationsanzeige-, TCI-, Informationen, die durch eine Netzwerkvorrichtung angezeigt werden.

3. Verfahren nach Anspruch 1 oder 2, ferner umfassend:
Erfassen der Kanalbelegungsrichtungsinformationen durch das Endgerät gemäß einem durch eine Netzwerkvorrichtung konfigurierten TCI-Zustand, wobei der TCI-Zustand durch ein Medienzugriffssteuerungs-, MAC-, Steuerelement, CE, aktiviert wird.

4. Verfahren nach Anspruch 1, wobei das Erfassen der Kanalbelegungsrichtungsinformationen umfasst:
Erfassen der Kanalbelegungsrichtungsinformationen aus einer Nachricht Msg2 in einem Direktzugriffsvorgang,
wobei die durch die Msg2 im Direktzugriffsvorgang angezeigten Kanalbelegungsrichtungsinformationen durch mindestens eines des Folgenden angezeigt werden:
eines SS/PBCH-Blockindexes;
einer NZP-CSI-RS-Ressourcenidentifikation;
einer SRS-Ressourcenidentifikation; und
eines TCI-Zustands,
und das Verfahren ferner umfasst:
Verwenden des freien Kanals für die Übertragung von Msg3 in einem Direktzugriffsvorgang.

5. Informationsanzeigeverfahren, angewendet auf eine Netzwerkvorrichtung, umfassend:
Bestimmen (S410) von Kanalbelegungsrichtungsinformationen; und
Anzeigen (S420) der Kanalbelegungsrichtungsinformationen unter Verwendung einer Downlink-Steuersignalisierung, DCI, die eine Uplink-, UL-, Zuweisung trägt,
wobei die Kanalbelegungsrichtungsinformationen durch ein Endgerät verwendet werden, um Listen-before-Talk("Hören-vor-Sprechen")-, LBT-, Richtungsinformationen des Endgeräts zu bestimmen, und die LBT-Richtungsinformationen dazu verwendet werden, eine Richtung eines Übertragungsstrahls festzulegen;
wobei die Kanalbelegungsrichtungsinformationen durch mindestens eines des Folgenden in der die UL-Zuweisung tragenden DCI angezeigt werden:
einen Synchronisationssignal/physikalischen Broadcast-Kanal-, SS/PBCH-, Blockindex;
eine Nicht-Null-Leistungs-Kanalzustandsinformations-Referenzsignal-, NZP-CSI-RS-, Ressourcenidentifikation;
eine Sondierungsreferenzsignal-, SRS-, Ressourcenidentifikation;
einen Übertragungskonfigurationsanzeige-, TCI-, Zustand; und
eine SRS-Ressourcenkennung,
wobei die DCI das DCI-Format 0_1 oder das DCI-Format 2_0 ist.

6. Verfahren nach Anspruch 5, wobei das Anzeigen (S420) der Kanalbelegungsrichtungsinformationen umfasst:
Anzeigen der Kanalbelegungsrichtungsinformationen durch Verwendung einer Nachricht Msg2 in einem Direktzugriffsvorgang,
wobei die Kanalbelegungsrichtungsinformationen durch mindestens eines des Folgenden in der Msg2 in dem Direktzugriffsvorgang angezeigt werden:
eines SS/PBCH-Blockindexes;
einer NZP-CSI-RS-Ressourcenidentifikation;
einer SRS-Ressourcenidentifikation; und
eines TCI-Zustands.

7. Endgerätevorrichtung, umfassend:
ein erstes Erfassungsmodul (1010), ausgelegt zum Erfassen von Kanalbelegungsrichtungsinformationen aus einer Downlink-Steuersignalisierung, DCI, die eine Uplink-, UL-, Zuweisung trägt;
ein erstes Bestimmungsmodul (1020), ausgelegt zum Bestimmen von Listen-before-Talk("Hören-vor-Sprechen")-, LBT-, Richtungsinformationen des Endgeräts gemäß den Kanalbelegungsrichtungsinformationen, wobei die LBT-Richtungsinformationen dazu verwendet werden, eine Richtung eines Übertragungsstrahls festzulegen; und
ein erstes Übertragungsmodul (1030), ausgelegt zum Durchführen einer Kanalabtastung gemäß den LBT-Richtungsinformationen des Endgeräts, und wenn ein Ergebnis der Kanalabtastung einen freien Kanal anzeigt, Verwenden des freien Kanals für die Uplink-Übertragung,
wobei die Kanalbelegungsrichtungsinformationen, die in der die UL-Zuweisung tragenden DCI angezeigt werden, durch mindestens eines des Folgenden angezeigt werden:
einen Synchronisationssignal/physikalischen Broadcast-Kanal-, SS/PBCH-, Blockindex;
eine Nicht-Null-Leistungs-Kanalzustandsinformations-Referenzsignal-, NZP-CSI-RS-, Ressourcenidentifikation;
eine Sondierungsreferenzsignal-, SRS-, Ressourcenidentifikation;
einen Übertragungskonfigurationsanzeige-, TCI-, Zustand; und
eine SRS-Ressourcenkennung,
wobei die DCI das DCI-Format 0_1 oder das DCI-Format 2_0 ist.

8. Netzwerkvorrichtung, umfassend:
ein drittes Bestimmungsmodul (1410), ausgelegt zum Bestimmen von Kanalbelegungsrichtungsinformationen; und
ein zweites Anzeigemodul (1420), ausgelegt zum Anzeigen der Kanalbelegungsrichtungsinformationen unter Verwendung einer Downlink-Steuersignalisierung, DCI, die eine Uplink-, UL-, Zuweisung trägt,
wobei die Kanalbelegungsrichtungsinformationen durch ein Endgerät verwendet werden, um Listen-before-Talk("Hören-vor-Sprechen")-, LBT-, Richtungsinformationen des Endgeräts zu bestimmen, und die LBT-Richtungsinformationen dazu verwendet werden, eine Richtung eines Übertragungsstrahls festzulegen;
wobei die Kanalbelegungsrichtungsinformationen durch mindestens eines des Folgenden in der die UL-Zuweisung tragenden DCI angezeigt werden:
einen Synchronisationssignal/physikalischen Broadcast-Kanal-, SS/PBCH-, Blockindex;
eine Nicht-Null-Leistungs-Kanalzustandsinformations-Referenzsignal-, NZP-CSI-RS-, Ressourcenidentifikation;
eine Sondierungsreferenzsignal-, SRS-, Ressourcenidentifikation;
einen Übertragungskonfigurationsanzeige-, TCI-, Zustand; und
eine SRS-Ressourcenkennung,
wobei die DCI das DCI-Format 0_1 oder das DCI-Format 2_0 ist.

9. Endgerät, umfassend einen Prozessor und einen Speicher, wobei der Speicher dazu ausgelegt ist, ein Computerprogramm zu speichern, das, wenn es auf dem Prozessor ausgeführt wird, den Prozessor veranlasst, das Verfahren nach einem der Ansprüche 1 bis 4 durchzuführen.

10. Netzwerkvorrichtung, umfassend einen Prozessor und einen Speicher, wobei der Speicher dazu ausgelegt ist, ein Computerprogramm zu speichern, das, wenn es auf dem Prozessor ausgeführt wird, den Prozessor veranlasst, das Verfahren nach einem der Ansprüche 5 bis 6 durchzuführen.

11. Computerlesbares Medium, auf dem ein Computerprogramm gespeichert ist, das, wenn es auf einem Prozessor ausgeführt wird, das Computerprogramm veranlasst, das Verfahren nach einem der Ansprüche 1 bis 6 zu realisieren.

## Revendications

1. Procédé de détermination d'informations, appliqué à un dispositif terminal, comprenant :
l'acquisition (S210) d'informations directionnelles d'occupation de canal à partir d'une signalisation de commande de liaison descendante, DCI, transportant une attribution de liaison montante, UL ;
la détermination (S220), selon les informations directionnelles d'occupation de canal, d'informations directionnelles écouter-avant-de-parler, LBT, du dispositif terminal, les informations directionnelles LBT étant utilisées pour établir une direction de faisceau de transmission ; et
la réalisation, par le dispositif terminal, d'une détection de canal selon les informations directionnelles LBT du dispositif terminal, et lorsqu'un résultat de la détection de canal indique un canal libre, l'utilisation du canal libre pour une transmission en liaison montante,
dans lequel les informations directionnelles d'occupation de canal indiquées dans la DCI transportant l'attribution UL sont indiquées par au moins l'un des éléments suivants :
un indice de bloc de signal de synchronisation/canal de diffusion physique, SS/PBCH ;
une identification de ressources d'un signal de référence d'informations d'état de canal à puissance non nulle, NZP-CSI-RS, ;
une identification de ressources d'un signal de référence de sondage, SRS ;
un état d'une indication de configuration de transmission, TCI ; et
un indicateur de ressources SRS,
dans lequel la DCI est DCI format 0_1 ou DCI format 2_0.

2. Procédé selon la revendication 1, dans lequel l'acquisition (S210) des informations directionnelles d'occupation de canal comprend en outre :
l'acquisition des informations directionnelles d'occupation de canal à partir d'un message d'information système ;
l'acquisition des informations directionnelles d'occupation de canal à partir d'un message de commande de ressources radio, RRC ;
l'acquisition des informations directionnelles d'occupation de canal selon des informations spatiales mesurées par le dispositif terminal ;
l'acquisition des informations directionnelles d'occupation de canal selon des informations spatiales reçues par le biais d'un canal de liaison descendante ; et/ou
l'acquisition des informations directionnelles d'occupation de canal à partir d'informations d'indication de configuration de transmission, TCI, indiquées par un dispositif de réseau.

3. Procédé selon la revendication 1 ou 2, comprenant en outre :
l'acquisition, par le dispositif terminal, des informations directionnelles d'occupation de canal selon un état TCI configuré par un dispositif de réseau, l'état TCI étant activé au moyen d'un élément de commande, CE, de commande d'accès au support, MAC.

4. Procédé selon la revendication 1, dans lequel l'acquisition des informations directionnelles d'occupation de canal comprend :
l'acquisition des informations directionnelles d'occupation de canal à partir d'un message Msg2 dans une procédure d'accès aléatoire,
dans lequel les informations directionnelles d'occupation de canal indiquées par le Msg2 dans la procédure d'accès aléatoire sont indiquées par au moins l'un des éléments suivants :
un indice de bloc SS/PBCH ;
une identification de ressources NZP-CSI-RS ;
une identification de ressources SRS ; et
un état TCI,
et le procédé comprend en outre :
l'utilisation du canal libre pour la transmission d'un Msg3 dans une procédure d'accès aléatoire.

5. Procédé d'indication d'informations, appliqué à un dispositif de réseau, comprenant :
la détermination (S410) d'informations directionnelles d'occupation de canal ; et
l'indication (S420) des informations directionnelles d'occupation de canal à l'aide d'une signalisation de commande de liaison descendante, DCI, transportant une attribution de liaison montante, UL,
dans lequel les informations directionnelles d'occupation de canal sont utilisées par un dispositif terminal pour déterminer des informations directionnelles écouter-avant-de-parler, LBT, du dispositif terminal, et les informations directionnelles LBT sont utilisées pour établir une direction de faisceau de transmission ;
dans lequel les informations directionnelles d'occupation de canal sont indiquées par au moins un des éléments suivants dans la DCI transportant l'attribution UL :
un indice de bloc de signal de synchronisation/canal de diffusion physique, SS/PBCH ;
une identification de ressources d'un signal de référence d'informations d'état de canal à puissance non nulle, NZP-CSI-RS, ;
une identification de ressources d'un signal de référence de sondage, SRS ;
un état d'indication de configuration de transmission, TCI ; et
un indicateur de ressources SRS,
dans lequel la DCI est DCI format 0_1 ou DCI format 2_0.

6. Procédé selon la revendication 5, dans lequel l'indication (S420) des informations directionnelles d'occupation de canal comprend :
l'indication des informations directionnelles d'occupation de canal à l'aide d'un message Msg2 dans une procédure d'accès aléatoire,
dans lequel les informations directionnelles d'occupation de canal sont indiquées par au moins un des éléments suivants dans le Msg2 dans la procédure d'accès aléatoire :
un indice de bloc SS/PBCH ;
une identification de ressources NZP-CSI-RS ;
une identification de ressources SRS ; et
un état TCI.

7. Dispositif terminal, comprenant :
un premier module d'acquisition (1010), configuré pour acquérir des informations directionnelles d'occupation de canal à partir d'une signalisation de commande de liaison descendante, DCI, transportant une attribution de liaison montante, UL ;
un premier module de détermination (1020), configurée pour déterminer, selon les informations directionnelles d'occupation de canal, des informations directionnelles écouter-avant-de-parler, LBT, du dispositif terminal, dans lequel les informations directionnelles LBT sont utilisées pour établir une direction de faisceau de transmission ; et
un premier module de transmission (1030) configuré pour effectuer une détection de canal selon les informations directionnelles LBT du dispositif terminal, et lorsqu'un résultat de la détection de canal indique un canal libre, l'utilisation du canal libre pour une transmission en liaison montante,
dans lequel les informations directionnelles d'occupation de canal indiquées dans la DCI transportant l'attribution UL sont indiquées par au moins l'un des éléments suivants :
un indice de bloc de signal de synchronisation/canal de diffusion physique, SS/PBCH ;
une identification de ressources d'un signal de référence d'informations d'état de canal à puissance non nulle, NZP-CSI-RS, ;
une identification de ressources d'un signal de référence de sondage, SRS ;
un état d'une indication de configuration de transmission, TCI ; et
un indicateur de ressources SRS,
dans lequel la DCI est DCI format 0_1 ou DCI format 2_0.

8. Dispositif de réseau, comprenant :
un troisième module de détermination (1410), configuré pour déterminer des informations directionnelles d'occupation de canal ; et
un second module d'indication (1420), configuré pour indiquer les informations directionnelles d'occupation de canal à l'aide d'une signalisation de commande de liaison descendante, DCI, transportant une attribution de liaison montante, UL,
dans lequel les informations directionnelles d'occupation de canal sont utilisées par un dispositif terminal pour déterminer des informations directionnelles écouter-avant-de-parler, LBT, du dispositif terminal, et les informations directionnelles LBT sont utilisées pour établir une direction de faisceau de transmission ;
dans lequel les informations directionnelles d'occupation de canal sont indiquées par au moins un des éléments suivants dans la DCI transportant l'attribution UL :
un indice de bloc de signal de synchronisation/canal de diffusion physique, SS/PBCH ;
une identification de ressources d'un signal de référence d'informations d'état de canal à puissance non nulle, NZP-CSI-RS, ;
une identification de ressources d'un signal de référence de sondage, SRS ;
un état d'indication de configuration de transmission, TCI ; et
un indicateur de ressources SRS,
dans lequel la DCI est DCI format 0_1 ou DCI format 2_0.

9. Dispositif terminal, comprenant un processeur et une mémoire, dans lequel la mémoire est configurée pour stocker un programme informatique qui, lorsqu'il est exécuté sur le processeur, amène le processeur à réaliser le procédé selon l'une quelconque des revendications 1 à 4.

10. Dispositif de réseau, comprenant un processeur et une mémoire, dans lequel la mémoire est configurée pour stocker un programme informatique qui, lorsqu'il est exécuté sur le processeur, amène le processeur à réaliser le procédé selon l'une quelconque des revendications 5 à 6.

11. Support lisible par ordinateur, sur lequel est stocké un programme informatique qui, lorsqu'il est exécuté sur un processeur, amène le programme informatique à mettre en œuvre le procédé selon l'une quelconque des revendications 1 à 6.
